# EUROPÄISCHE PATENTSCHRIFT

(11) **EP 0 607 621 B1**
(45) Veröffentlichungstag und Bekanntmachung des Hinweises auf die Patenterteilung: **04.10.1995**
(21) Anmeldenummer: 93121095.9
(22) Anmeldetag: 30.12.1993
(51) Int. Cl.: F15B 15/10, F16K 31/126

(54) **Pneumatischer Stellantrieb**
Pneumatic actuator
Vérin pneumatique de réglage

(30) Priorität: 20.01.1993 DE 9300685 U
(43) Veröffentlichungstag der Anmeldung: 27.07.1994
(73) Patentinhaber: ARCA REGLER GmbH, D-47918 Tönisvorst (DE)
(72) Erfinder: Nägel, Heinz, D-54550 Daun (DE); von der Weydt, Willy, D-47918 Tönisvorst (DE)
(74) Vertreter: Paul, Dieter-Alfred, Dipl.-Ing.

(56) Entgegenhaltungen:
- DE-A- 3 004 106
- DE-U- 9 110 959
- DE-U- 9 210 096

## Beschreibung

Die Erfindung betrifft einen pneumatischen Stellantrieb für Stellglieder, insbesondere Stellventile nach den Oberbegriffen der Ansprüche (1) und (2).

Solche Stellantriebe sind in vielfältigen Ausführungsformen bekannt (z.B. US-PS 4 922 952; US-PS 4 50̸9 40̸3; US-PS 4 343 224; DE-PS 36 37 0̸68) und dienen dem Antrieb von Stellgliedern, insbesondere Stellventilen, welche vornehmlich im Regelkreis verfahrenstechnischer Anlagen zur Anwendung kommen. Sie sind meist als Membranstellantriebe ausgebildet. Solche Membranstellantriebe weisen als Antriebsgehäuse ein regelmäßig kreisrundes Membrangehäuse auf, das aus zwei miteinander verschraubten, topfförmigen Gehäuseschalen besteht, zwischen deren aufeinanderliegenden Flanschen eine als Antriebsorgan dienende Membran aus flexiblem Werkstoff eingespannt ist. In der Mitte der Membran ist als Antriebselement eine Antriebsstange befestigt, die mit der Membran beweglich gelagert ist und am unteren Ende des Membrangehäuses austritt. Das freie Ende der Antriebsstange ist mit beispielsweise der Ventilstange des Stellventils verbindbar.

Zwecks Verbesserung der Stellgenauigkeit des jeweiligen Stellgliedes wird an dem Membranstellantrieb ein Stellungsregler angebracht. Er gleicht Abweichungen in der jeweiligen Stellung des Stellgliedes aus, die beispielsweise durch Reibung in Stoffbuchsen oder durch Rückwirkungen vom Medium bewirkt werden. Der Stellungsregler wird mit Luftdruck versorgt, und von seinem Ausgang geht ein Luftzuführkanal zu einer der beiden durch die Membran aufgeteilten Kammern des Membrangehäuses, nämlich der Druckkammer, aus. Durch Steuerung der Luftzufuhr wird die Membranstellung und damit die Stellung des Antriebselements beeinflußt. Die Membran wird dabei auf der der Druckkammer abgewandten Seite durch ein Rückstellglied, meist in Form einer oder mehrerer Federn, beaufschlagt, die die Rückstellung der Membran bei einer gesteuerten Druckentlastung innerhalb der Druckkammer bewirkt. Das Rückstellglied ist innerhalb der durch die Membran von der Druckkammer getrennten Rückstellkammer angeordnet. Von der Rückstellkammer geht ein Belüftungskanal aus, durch den die Rückstellkammer Verbindung zur Atmosphäre enthält.

Bei einer Ausführungsform (US-PS 4 922 952) wird der Stellungsregler unmittelbar unterhalb des Membrangehäuses an einem dort vorhandenen Joch - auch "Laterne" genannt - befestigt. Die Luftversorgung der dem Stellungsregler benachbarten Druckkammer erfolgt über einen internen, also nicht nach außen vorstehenden Luftzuführkanal auf kurzem Wege. Auf diese Weise konnte eine aufwendige und für Beschädigungen anfällige Verrohrung vermieden werden. Die Anordnung hat zudem den Vorteil, daß Dejustierungen beim Transport nicht mehr auftreten können und der Hubabgriff für die Stellungsregelung gegen Berührung und Umwelteinflüsse geschützt ist.

Die vollständig gekapselte Führung des Luftzuführkanals ist möglich, wenn sich die Druckkammer unterhalb der Membran und damit benachbart zum Stellungsreglier befindet. In nahezu der Hälfte der Anwendungsfälle muß jedoch die Membran von oben mit Druck beaufschlagt werden. Dieser Forderung wird bei Standardmembranstellantrieben dadurch Rechnung getragen, daß das Membrangehäuse oder wenigstens die Membran mit Rückstellglied leicht in umgekehrter Stellung montiert werden können, so daß Druckkammer und Rückstellkammer ihre Lage gegeneinander vertauschen. Um in solchen Fällen eine aufwendige und empfindliche Verrohrung zu vermeiden, ist vorgeschlagen worden, den Stellungsregler innerhalb des Membrangehäuses anzuordnen (DE-PS 36 37 0̸68). Diese Lösung ist jedoch aufwendig und hat eine große Bauhöhe zur Folge. Ein weiterer Nachteil dieser Konstruktion ist, daß der Stellungsregler nicht variabel montiert werden kann.

Mit dem Stellantrieb nach dem DE-GM 91 10̸ 959.0̸ hat man eine einfachere und kompaktere Lösung gefunden. Bei diesem Stellantrieb ist ein Luftführungskanal in die Antriebsstange integriert. Dieser Luftführungskanal reicht einerends bis in die dem Stellungsregler abgewandte Seite der Membran und mündet in die dortige Kammer. Anderenends öffnet er sich zu einem Übergabeanschluß benachbart zum Stellungsregler. In einer ersten Montagestellung, bei der die Rückstellkammer auf der dem Stellungsregler entfernten Seite der Membran liegt, dient der Luftführungskanal als Belüftung und ist deshalb über den Übergabeanschluß an einen entsprechenden Belüftungskanal angeschlossen. In der umgekehrten, zweiten Montagestellung hat der Luftführungskanal Verbindung zum Luftzuführkanal und damit zum Stellungsregler. Die jeweils benachbarte Kammer wird dann je nach Montagestellung einmal mit dem Belüftungskanal und einmal mit dem Luftführungskanal auf direktem Wege verbunden. Damit ist eine vollkommen interne Verrohrung auch für Stellantriebe gefunden worden, bei denen die Antriebsrichtung mit gleichen Teilen umgekehrt werden kann.

Gleichwohl ist die Herstellung dieses Stellantriebes immer noch mit einer Reihe von Bearbeitungsvorgängen verbunden, die zu entsprechenden Kosten führen. Bei dem Stellantrieb nach dem DE-GM 92 10̸ 0̸96.1 ist man deshalb von dem Prinzip des Übergabeanschlusses und der Druckluftzufuhr über das Antriebselement abgegangen. Man hat hierfür innerhalb der Rückstellkammer einen Luftzuführkanal vorgesehen, der die Bewegungen des Antriebsorgans mitmachen kann, beispielsweise flexibel ist, und der in der ersten Montagestellung einerends mit der Druckkammer und anderenends mit einer Anschlußöffnung im Antriebsgehäuse verbunden ist, über die dann Verbindung zum Stellungsregler besteht. In der zweiten Montagestellung ist der innerhalb der Rückstellkammer verlaufende Teil des Luftzuführkanals geschlossen. Über einen weiteren Anschlußöffnung im druckkammerseitigen Teil des Antriebsgehäuses besteht dann eine direkte Verbindung zu dem Stellungsregler. Die Belüftung erfolgt dabei jeweils über einen entsprechenden Kanal im Antriebselement mit einem in den Beschleierungsraum des Stellungsreglers im Bereich des Anschlusses an das Antriebselement mündenden Ausgang.

Auch bei diesem Stellantrieb besteht noch die Forderung an weiterer Vereinfachung. Insbesondere ist er nicht besonders geeignet für eine baukastenmäßig gestaltete Serie von Stellantrieben unter weitestgehender Übernahme identischer Teile.

Der Erfindung liegt deshalb die Aufgabe zugrunde, einen möglichst einfach aufgebauten Stellantrieb bereitzustellen, der für verschiedene Typen nur wenig geändert werden muß bzw. nachgerüstet werden kann.

Diese Aufgabe wird erfindungsgemäß dadurch gelöst, daß die eine Anschlußöffnung mit dem Luftzuführkanal Verbindung hat, und daß der Übergabeanschluß ein in die Rückstellkammer eingesetztes, separates Bauteil ist, das die Anschlußöffnung mit dem Luftführungskanal verbindet.

Mit der Erfindung ist man zu dem Prinzip zurückgekehrt, die vom Stellungsregler ausgehende Druckluft über einen Luftführungskanal im Antriebselement in die dem Stellungsregler entfernt liegende Druckkammer zu leiten. Der hierfür notwendige Übergabeanschluß vom ortsfest angeordneten Luftzuführkanal zu dem beweglichen Antriebselement und dem darin verlaufenden Luftführungskanal ist hier jedoch innerhalb der Rückstellkammer angeordnet und bildet dort ein separat eingesetztes Bauteil. Ein solches Bauteil läßt sich sehr einfach gestalten und kann je nach Bedarf montiert und demontiert werden. Im letzteren Fall entsteht dann ein Stellantrieb, bei dem ein Antrieb des Antriebselements nur in einer Richtung möglich ist, ohne daß hierfür andere Teile des Stellantriebes geändert oder ausgewechselt werden müßten.

Der Grundgedanke der vorliegenden Erfindung eignet sich insbesondere für Stellantriebe, bei denen Druckkammer und Rückstellkammer, beispielsweise durch Umkehrung der Montage des Membrangehäuses, gegeneinander vertauscht werden können, so daß in einer ersten Montagestelle die Rückstellkammer und in einer zweiten Montagestellung die Druckkammer dem Stellungsregler benachbart ist. In diesem Fall sieht die Erfindung vor, daß die erste Anschlußöffnung für die erste Montagestellung mit dem Luftzuführkanal verbindbar und für die zweite Montagestellung sperrbar ist, daß der Übergabeanschluß ein in die Rückstellkammer eingesetzes, separates Bauteil ist, das in der ersten Montagestellung die erste Anschlußöffnung mit dem Luftführungskanal verbindet, und daß die Druckkammer eine zweite Anschlußöffnung hat, die für die zweite Montagestellung mit dem Luftzuführkanal verbindbar und für die erste Montagestellung sperrbar ist.

Nach der Erfindung ist also die Druckkammer in einer zweiten Montagestellung dem Stellungsregler benachbart und hat dann auf direktem Wege über die zweite Anschlußöffnung und den Luftzuführkanal Verbindung zum Stellungsregler. In der ersten Montagestellung liegt die Rückstellkammer dem Stellungsregler benachbart. Der Stellungsregler hat dann über den Luftzuführkanal und die erste Anschlußöffnung Verbindung mit dem Übergabeanschluß, der die vom Stellungsregler kommende Druckluft an den Luftführungskanal im Antriebselement weitergibt, so daß die Druckluft in die dem Stellungsregler entfernt liegende Druckkammer gelangt. Damit ist auf einfache Weise eine vollkommen interne Verrohrung verwirklicht, wobei ein weiterer Vorzug des erfindungsgemäßen Übergabeanschlusses darin besteht, daß er als separates Bauteil leicht zu montieren ist, aber auch entfernt oder sogar weggelassen werden kann, um eine einfachere Ausführung des Stellantriebes zu verwirklichen. Es kann somit eine Serie von Stellantrieben mit unterschiedlichen Fähigkeiten bereitgestellt werden, wobei für die einfacheren Ausführungen der Übergabeanschluß weggelassen oder demontiert werden kann.

In Ausbildung der Erfindung ist vorgesehen, daß der Luftführungskanal eine über dem Bereich des Übergabeanschlusses hinausgehende Verlängerung aufweist, die in einen Beschleierungsraum im Bereich der Kupplung von Stellungsregler und Antriebselement mündet, wobei die Verlängerung für die ersten Montagestellung sperrbar und für die zweite Montagestellung öffenbar ist und daß der Übergabeanschluß eine Durchtrittsöffnung aufweist, welche für die erste Montagestellung sperrbar und für die zweite Montagestellung öffenbar ist. Auf diese Weise besteht die Möglichkeit, den Luftführungskanal in der zweiten Montagestellung als Belüftungskanal für die Rückstellkammer zu verwenden, wobei die Belüftung in den Beschleierungsraum erfolgt. Letzteres hat den Vorzug, daß bei einer Vergrößerung der Rückstellkammer die vom Stellungsregler kommende, gereinigte Abblasluft in die Rückstellkammer gelangt.

Bei einem weiteren Merkmal der Erfindung ist vorgesehen, daß der Luftführungskanal in einer Spannschraube verläuft, mit der Antriebsorgane und Antriebselemente verspannt sind und die über eine verschließbare Öffnung im Antriebsgehäuse für den Wechsel der Montagestellung herauslösbar ist. Sofern der Luftführungskanal als Belüftungskanal dienen soll, sollte das der Verlängerung benachbarte Ende der Spannschraube mit einer Verschlußschraube sperrbar sein.

Die Erfindung sieht ferner vor, daß von dem Antriebsorgan rückstellkammerseitig in axialer Verlängerung des Antriebselementes ein Fortsatz vorsteht, der in der ersten Montagestellung stirnseitig mit dem Antriesbelement lösbar verspannt ist und an dem der Übergabeanschluß abdichtend anliegt. Der Vorteil besteht darin, daß der Übergabeanschluß beim Wechsel der Montagestellung in Anlage an dem Fortsatz verbleibt, also die Abdichtung nicht beeinträchtigt wird.

In weiterer Ausgestaltung der Erfindung ist vorgesehen, daß der Übergabeanschluß das Antriebselement abdichtend umgibt. Ferner ist vorgesehen, daß der Übergabeanschluß an der Innenseite des rückstellkammerseitigen Teils des Antriebsgehäuses befestigt ist. Dabei kann der Übergabeanschluß mit dem Antriebsgehäuse abgedichtete Übergaberäume bilden, so daß auf Bohrungen verzichtet werden kann.

Die Erfindung sieht des weiteren vor, daß das Antriebsgehäuse rückstellkammerseitig eine Belüftungsöffnung aufweist, welche in der ersten Montagestellung Verbindung zu einem Belüftungskanal hat, der in einem Beschleierungsraum im Bereich der Kopplung von Antriebselement und Stellungsreglern mündet und für die zweite Montagestellung sperrbar ist. Auf diese Weise wird auch in der ersten Montagestellung eine Belüftung der Rückstellkammer über den Beschleierungsraum bewirkt.

Normalerweise sollte sich der Übergabeanschluß außerhalb der Anlage des Rückstellelements erstrecken, damit durch dessen Montage bzw. dessen Demontage die Federvorspannung nicht verändert wird. Es kann jedoch zweckmäßig sein, daß sich der Übergabeanschluß bis in den Bereich des Rückstellelements erstreckt und dieses dann an ihm anliegt. Hierdurch wird eine eventuell gewünschte Vergrößerung der Vorspannung des Rückstellelements bewirkt. In diesem Fall sollte der Übergabeanschluß Führungselemente für das Rückstellelement aufweisen.

In der Zeichnung ist die Erfindung an Hand eines Ausführungsbeispiels näher veranschaulicht. Es zeigen:
- Figur (1): einen vertikalen Axialschnitt durch einen erfindungsgemäßen Membranstellantrieb in einer ersten Montagestellung;
- Figur (2): denselben Schnitt durch den Membranstellantrieb gemäß Figur (1) in einer zweiten Montagestellung;
- Figur (3): einen vertikalen Axialschnitt durch einen anderen erfindungsgemäßen Membranstellantrieb in einer ersten Montagestellung und
- Figur (4): denselben Schnitt durch den Membranstellantrieb gemäß Figur (3) in einer zweiten Montagestellung,

Der in den Figuren (1) und (2) dargestellte Membranstellantrieb (1) weist eine jochförmige Laterne (2) auf, die zwei im Abstand zueinander angeordnete Vertikalsäulen (3, 4) und einen diese verbindenden, obenseitigen Sockel (5) aufweist. Der Membranstellantrieb (1) ist über die nicht dargestellte Unterseite der Laterne (2) auf einem Stellglied, beispielsweise einem Stellventil, montiert.

Auf der Oberseite des Sockels (5) ruht ein Membrangehäuse (6), das aus zwei übereinander angeordneten von oben gesehen kreisförmigen Gehäuseschalen (7, 8) besteht, die mittig jeweils eine Öffnung einschließende, nach außen vorstehende Kragen (9, 10̸) mit Innengewinde haben und an den einander zugewandten Kanten nach außen vorstehende Flansche (11, 12) aufweisen und dort mittels über den Umfang verteilter Schrauben (13, 14) gegeneinander verspannt sind. Zwischen den Flanschen (11, 12) ist eine Membran (15) aus einem biegsamen Werkstoff, beispielsweise Kautschukmaterial, eingespannt. Die Membran (15) unterteilt den Innenraum des Membrangehäuses (6) in eine in Figur (1) oben liegende und in Figur (2) unten liegende Druckkammer (16) und eine in Figur (1) unten liegende und in Figur (2) oben liegende Rückstellkammer (17).

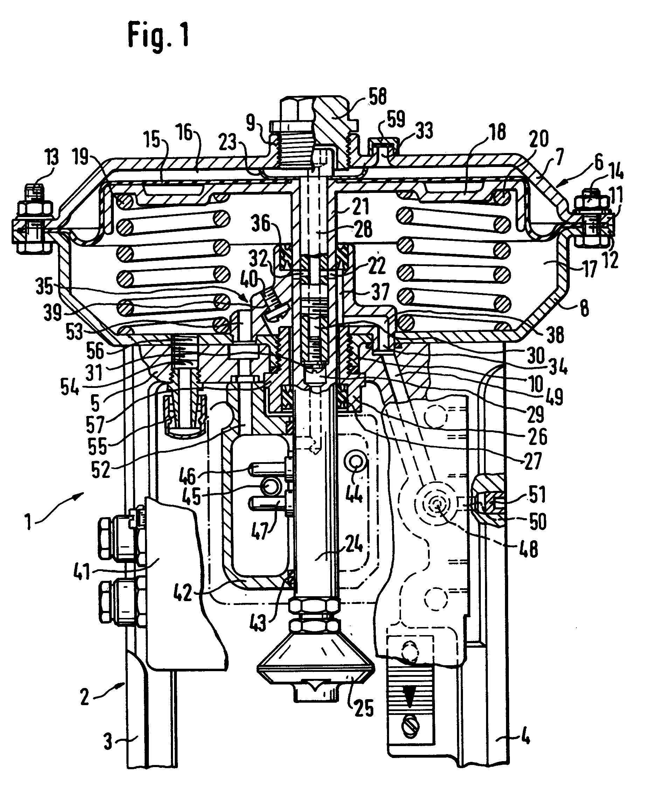

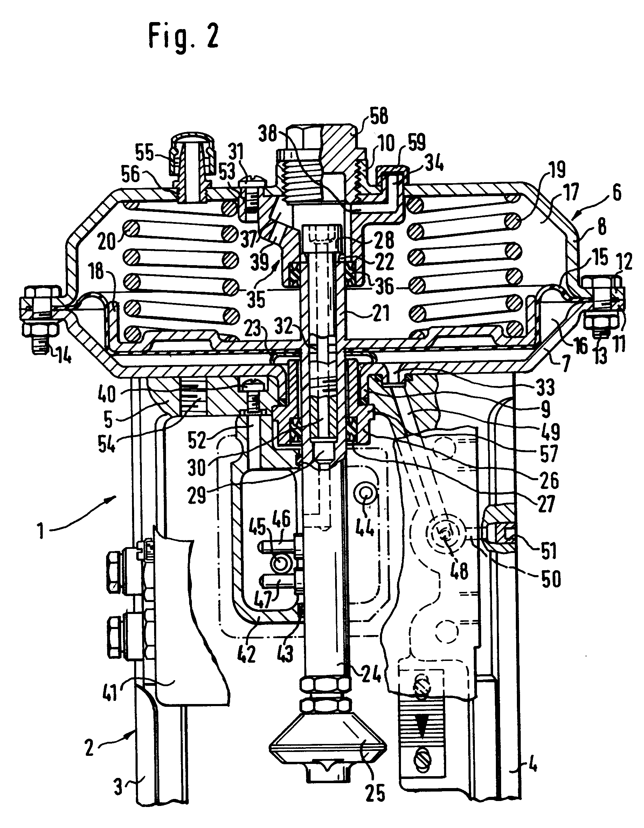

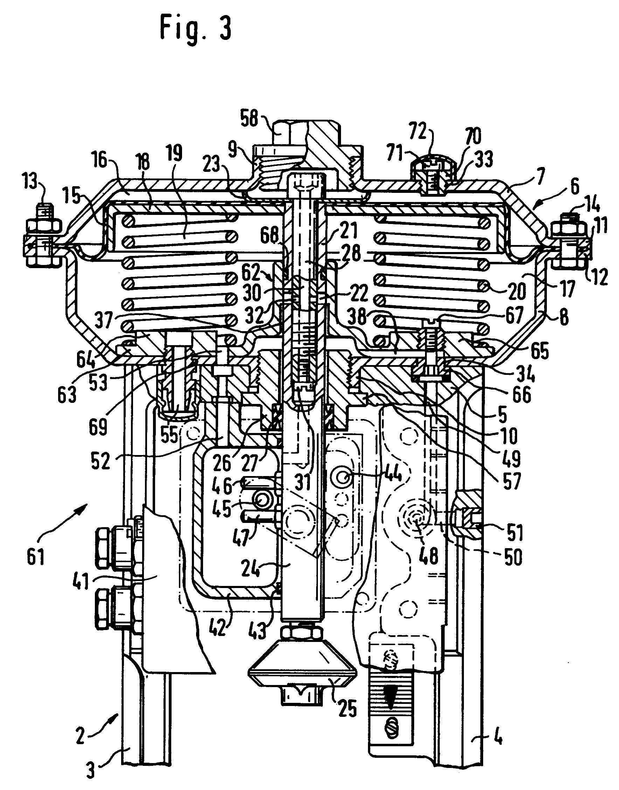

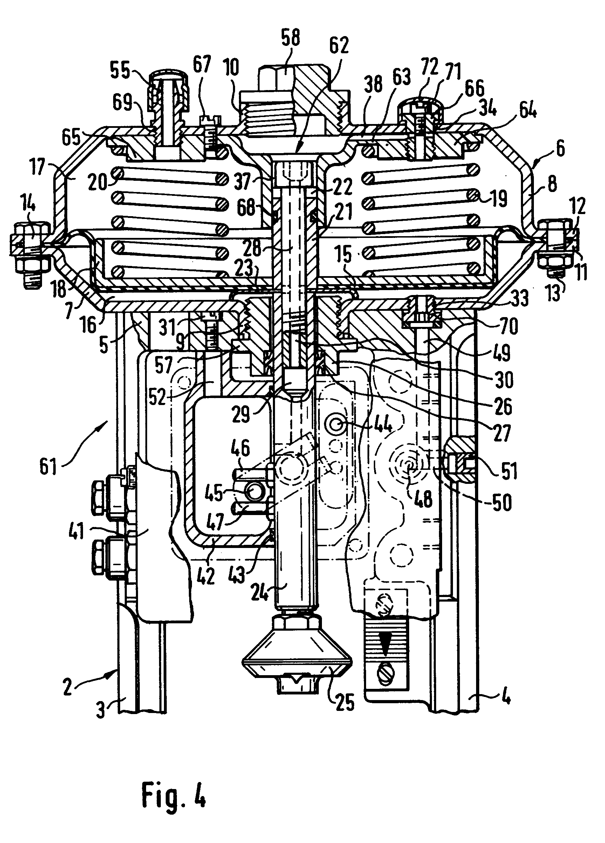

In der Rückstellkammer (17) ist ein Membranteller (18) vorgesehen, der auf einer Seite an der Membran (15) anliegt und auf der anderen Seite durch über den Umfang verteilte, als Druckfedern ausgebildete Schraubenfedern (19, 20̸) abgestützt wird. Die Schraubenfedern (19, 20̸) liegen an der Innenseite der rückstellkammerseitigen Gehäuseschale (8) an. Mittig weist der Membranteller (18) ein Durchgangsloch mit einem sich von diesem in die Rückstellkammer (17) erstreckenden, hülsenförmigen Fortsatz (21) auf, dessen dem Membranteller (18) entferntes Ende zahnartige Vorsprünge - beispielhaft mit (22) bezeichnet - aufweist. An der dem Membranteller (18) abgewandten Seite liegt an der Membran (15) ein im Durchmesser wesentlich kleinerer Anschlagteller (23) an, der den oberen (Figur 1) bzw. unteren (Figur 2) Hubpunkt der Membran (15) durch Anlage an dem Membrangehäuse (6) beschreibt.

Mittig zur Laterne (2) erstreckt sich vertikal eine Antriebsstange (24). Sie ist über ein Kupplungselement (25) - was hier nicht näher dargestellt ist - mit der Spindel eines Stellventils gekuppelt. Nach oben hin durchdringt die Antriebsstange (24) eine Führungsbuchse (26) und ragt so in das Membrangehäuse (6) hinein. Dabei liegt an ihr im Bereich der Führungsbuchse (26) eine Ringdichtung (27) an, die eine Abdichtung gegenüber dem Inneren des Membrangehäuses (6) bewirkt. Der Fortsatz (21) bildet eine Verlängerung der Antriebsstange (24). Über eine Spannschraube (28), die in einer Axialbohrung (29) in der Antriebsstange (24) eingeschraubt ist, wird der Fortsatz (21) gegen die obere Stirnseite der Antriebsstange (24) verspannt. Die Spannschraube (28) hat einen axial durchgehenden Luftführungskanal (30̸), der untenseitig ein Innengewinde trägt, in das gemäß Figur (1) eine Dichtschraube (31) eingesetzt ist. Etwa mittig verlaufen zu dem Luftführungskanal Querbohrungen - beispielhaft mit (32) bezeichnet -.

Die beiden Gehäuseschalen (7, 8) weisen vertikal miteinander fluchtende Anschlußöffnungen (33, 34) auf, und zwar in dem Bereich zwischen den Schraubenfedern (19, 20̸), jedoch exzentrisch zur Antriebsstange (24). In die rückstellkammerseitige Anschlußöffnung (34) ragt ein stutzenförmiger Abschnitt eines Übergabeanschlußformteils (35), welches die Antriebsstange (24) buchsenartig umgibt. Das Übergabeanschlußformteil (35) ist an der Gehäuseschale (8) innenseitig lösbar befestigt und weist an seinem gegenüberliegenden Ende eine an dem Fortsatz (21) anliegende Ringlippendichtung (36) auf. Es schließt einen Übergaberaum (37) ein, von dem ein Übergabekanal (38) zu der rückstellkammerseitigen Anschlußöffnung (34) geht. Ferner weist das Übergabeanschlußformteil (35) einen Durchgangskanal (39) auf, der in der Stellung gemäß Figur (1) mit einer Dichtschraube (40̸) geschlossen ist.

An der dem Betrachter vorn liegenden Seite der Laterne (2) ist ein nur teilweise dargestellter Stellungsregler (41) üblicher Bauart angeschraubt, wie sie beispielsweise in der US-PS 4 50̸9 40̸3, US-PS 4 343 224 oder DE-PS 36 37 0̸68 offenbart sind, auf deren Inhalt zu dessen Beschreibung hier Bezug genommen wird. Auf der der Antriebsstange (24) zugewandten, dem Betrachter abgewandten Seite des Stellungsreglers (41) ist ein teilweise im Schnitt dargestelltes Beschleierungsgehäuse (42) angebracht, das die Antriebsstange (24) entsprechend dem DE-GM 92 10̸ 574.2 nur teilweise an deren Rückseite umgibt, wobei ein Abdichtring (43) für eine Abdichtung des von dem Beschleierungsgehäuse (42) umgebenden Raumes sorgt. In das Beschleierungsgehäuse (42) mündet ein Abblaskanal (44) des Stellungsreglers (41), über den der Stellungsregler (41) abblasende Steuerluft in das Beschleierungsgehäuse (42) einbläst. Ferner endet in dem Beschleierungsgehäuse (42) die Axialbohrung (29) in der Antriebsstange (24) mit einem Querabschnitt.

Der Stellungsregler (41) weist antriebsstangenseitig einen senkrecht zur Zeichnungsebene vorstehenden, in ihm schwenkbar gelagerten Übertragungsstift (45) auf, der in den Zwischenraum zwischen zwei vertikal übereinander angeordneten, jeweils in die Antriebsstange (24) eingeschraubten Horizontalstiften (46, 47) im wesentlichen spielfrei einfaßt. Auf diese Weise wird eine Vertikalbewegung der Antriebsstange (24) auf den Übertragungsstift (45) übertragen. Der Stellungsregler (41) kann hierdurch den Hub der Antriebsstange (24) und der damit verbundenen Ventilstange mit einem von einer Regel- oder Steuereinrichtung kommenden Stellsignal vergleichen und bei Abweichungen eine Korrektur vornehmen.

Der Stellungsregler (41) weist einen Druckluftausgang (48) auf, der abdichtend mit einem Kanalsystem in der rechten Vertikalsäule (4) verbunden ist. Zum einen besteht Verbindung zu einem ersten Luftzuführkanal (49), der durch die Vertikalsäule (4) und den Sockel (5) bis zu dessen Oberseite geht. Ferner zweigt ein zweiter Luftzuführkanal (50̸) waagerecht nach außen ab, der mit einer Stopfschraube (51) verschlossen ist. Er findet dann Verwendung, wenn eine externe Verrohrung zu der Druckkammer (16) in der Position gemäß Figur (1) vorgenommen wird.

Von dem Beschleierungsgehäuse (42) geht nach oben ein Belüftungskanal (52) ab, der sich in dem Sockel (5) fortsetzt und in einer Verbreiterung an dessen Oberseite ausläuft. In der - ersten - Montagestellung gemäß Figur (1) liegt dazu koaxial ein Belüftungskanalabschnitt (53), der sich durch die Gehäuseschale (8) und durch das Übergabeanschlußformteil (35) erstreckt, so daß eine Verbindung zwischen Beschleierungsgehäuse (42) und Rückstellkammer (17) besteht. Ferner ist in dem Sockel (5) eine Gewindebohrung (54) eingeformt, in deren Unterseite gemäß Figur (1) ein Entlüftungsstopfen (55) eingeschraubt ist. Sie setzt sich in der - ersten - Montagestellung gemäß Figur (1) in einer entsprechenden Gewindebohrung (56) in der rückstellkammerseitigen Gehäuseschale (8) fort.

Die Darstellung des Membranstellantriebs (1) in den Figuren (1) und (2) unterscheiden sich durch unterschiedliche Montage einzelner Teile, und zwar in folgender Weise.

In der ersten Montagestellung gemäß Figur (1) ruht die Gehäuseschale (8) auf der Oberseite des Sockels (5). Der Kragen (10̸) der Gehäuseschale (8) ragt in eine entsprechende Bohrung in dem Sockel (5) hinein, wobei in das Innengewinde des Kragens (13) die Führungsbuchse (26) eingeschraubt ist. Die Führungsbuchse (26) hat außenseitig einen Ringsteg (57), der sich untenseitig an dem Sockel (5) abstützt, so daß das Membrangehäuse (6) beim Einschrauben der Führungsbuchse (26) nach unten gegen die Oberseite des Sockels (5) verspannt wird. In den obenseitigen Kragen (9), ist eine Abschlußschraube (56) dichtend eingeschraubt.

Das Membrangehäuse (6) ist so ausgerichtet, daß die Anschlußöffnung (34) in der Gehäuseschale (8) und damit der Übergabekanal (38) Verbindung zu dem ersten Luftzuführkanal (49) hat. Die druckkammerseitige Anschlußöffnung (33) ist durch eine Dichthaube (59) geschlossen.

Die Vorsprünge (21) des Fortsatzes sitzen auf der oberen Stirnsseite der Antriebsstange (24) auf, wobei sich Durchgangsöffnungen ergeben, die in der gleichen Horizontalebene wie die Querbohrungen (32) liegen. Auf diese Weise wird eine Verbindung zwischen Übergaberaum (27) und Luftführungskanal (30̸) hergstellt. Damit kann vom Stellungsregler (41) ausgehende Druckluft über den Druckluftausgang (48), den ersten Luftzuführkanal (49), den Übergabekanal (38), den Übergaberaum (37), die Öffnungen zwischen Fortsatz (21) und Antriebsstange (24), die Querbohrungen (32) und den Luftführungskanal (34) in die Druckkammer (16) gelangen, so daß die Antriebsstange (24) bei entsprechender Druckbeaufschlagung gegen den Widerstand der Schraubfedern (19, 20̸) vertikal abwärts bewegt wird. Dabei kann die verdrängte Luft in der Rückstellkammer (17) über den Belüftungsstopfen (55) nach außen entweichen. Bei umgekehrter Bewegung der Membran (15), also bei einer Druckentlastung der Druckkammer (16), wird über den Belüftungsstopfen (55) keine Außenluft angesaugt, da die Rückstellkammer (17) über das Beschleierungsgehäuse (42), den Belüftungskanal (52) und den Belüftungskanalabschnitt (53) mit Abluft aus dem Abblaskanal (44) des Stellungsreglers (41) versorgt wird, welche gereinigt und von eventuellen aggressiven Bestandteilen befreit ist.

In der zweiten Montagestellung gemäß Figur (2) ist das Membrangehäuse (6) um 180̸° um eine horizontale Achse umgedreht worden. Für diesen Vorgang wird zunächst die Abschlußschraube (58) aus dem Kragen (9) herausgeschraubt. Dann wird die Spannschraube (28) aus dem Gewinde in der Antriebsstange (24) herausgeschraubt. Schließlich wird die Führungsbuchse (26) aus dem Kragen (10̸) nach unten herausgeschraubt. Das Membrangehäuse (6) kann dann nach oben abgenommen werden.

Im abgehobenen Zustand wird die Dichtschraube (40̸) aus dem Durchgangskanal (39) herausgeschraubt und von außen in den Belüftungskanalabschnitt (53) abdichtend eingeschraubt, so daß dieser geschlossen ist. Ferner wird die Dichthaube (59) von der druckkkammerseitigen Abschlußöffnung (33) abgenommen und auf die rückstellkammerseitige Abschlußöffnung (34) bzw. auf den dort überstehenden Abschnitt des Übergabekanals (38) aufgesetzt, so daß auch dieser nach außen hin abgeschlossen ist. Des weiteren wird die in dem Luftführungskanal (30̸) sitzende Dichtschraube (31) herausgeschraubt und von der Oberseite des Sockels (5) her in den Belüftungskanal (52) eingeschraubt, so daß auch dieser geschlossen ist. Schließlich wird der Entlüftungsstopfen (55) aus der Gewindebohrung (54) herausgeschraubt und in die Gewindebohrung (56) in der Gehäuseschale (8) eingeschraubt. Das Membrangehäuse (6) ist dann präpariert für die umgekehrte Montage gemäß Figur (2).

Hierzu wird das Membrangehäuse (6) mit der Außenseite der Gehäuseschale (7) derart auf die Oberseite des Sockels (5) aufgesetzt, daß die Anschlußöffnung (33) in eine Ausnehmung in dem Sockel (5), in die auch der erste Luftzuführkanal (49) mündet, einfaßt. Auf diese Weise wird eine direkte Verbindung zwischen Stellungsregler (41) und der nun unten liegenden Druckkammer (16) hergestellt. Es wird dann die Spannschraube (28) wieder in die Axialbohrung (29) in der Antriebsstange (24) eingeschraubt, bis der Anschlagteller (23) zwischen Fortsatz (21) und obenseitiger Stirnseite der Antriebsstange (24) verspannt ist. Desweiteren wird die Führungsbuchse (26) in den nun nach unten in den Sockel (5) hineinragenden Kragen (9) eingeschraubt, wodurch die druckkammerseitige Gehäuseschale (8) gegen die Oberseite des Sockels (5) verspannt wird. Schließlich wird die Anschlußschraube (58) in den nun oben liegenden Kragen (10̸) eingeschraubt.

Bei einer Druckbeaufschlagung der Druckkammer (16) über den ersten Luftzuführkanal (49) und die Anschlußöffnung (33) wird die Antriebsstange (24) vertikal nach oben bewegt. Die hierdurch in der Rückstellkammer (17) verdrängte Luft entweicht dann über den Entlüftungsstopfen (55). Bei einer Druckentlastung bewegt sich die Antriebsstange (24) vertikal nach unten. Dabei wird die Rückstellkammer (17) mit Luft aus dem Beschleierungsgehäuse (42) über die Axialbohrung (29), den Luftführungskanal (30̸) in der Spannschraube (28) und über den Durchgangskanal (39) versorgt. Hierdurch wird eine Luftansaugung über den Entlüftungsstopfen (55) vermieden.

Der in den Figuren (3) und (4) dargestellte Stellantrieb (61) unterscheidet sich nur in den nachstehend näher beschriebenen Details von dem Stellantrieb (1) gemäß den Figuren (1) und (2), wobei die Figur (3) hinsichtlich der Montagestellung der Figur (1) und die Figur (4) der Figur (2) entsprechen. In den Figuren (3) und (4) sind die Teile des Stellantriebs (61), die mit den Teilen des in den Figuren (1) und (2) dargestellten Stellantrieb (1) zumindest funktionsgleich sind, mit den selben Bezugsziffern versehen. Hinsichtlich dieser Bezugsziffern wird auf die Beschreibung zu dem Stellventil (1) gemäß den Figuren (1) und (2) Bezug genommen.

Der wesentliche Unterschied besteht darin, daß ein anders gestaltetes Übergabeanschlußformteil (62) in die Rückstellkammer (17) eingesetzt ist. Es hat einen sich über den gesamten, waagerechten Bereich der druckkammerseitigen Gehäuseschale (8) erstreckenden Übergabeboden (63), der an der Innenseite der Gehäuseschale (8) anliegt. Aufgrund dieser Erstreckung des Übergabebodens (63) stützen sich die Schraubenfedern (19, 20̸) an dem Übergabeboden (63) ab, wobei in die Windungen der Schraubenfedern (19, 20̸) vorspringende Führungsabsätze (64, 65) für die Führung der Schraubenfedern (19, 20̸) sorgen. Bei dem Ausführungsbeispiel gemäß den Figuren (1) und (2) besorgen dies Ausbuchtungen in dem Membranteller (18). Bei gleicher Geometrie des Membrangehäuses (6) stehen also hier die Schraubenfedern (19, 20̸) unter entsprechend vergrößerter Vorspannung.

Die Anschlußöffnungen (33, 34) sind hier nach außen versetzt und liegen koaxial zur Achse der Windungen der Schraubenfeder (20̸). Die druckkammerseitige Anschlußöffnung (34) durchfaßt ein Einsatz (66), der in dem Führungsabsatz (65) eingeschraubt und membrantellerseitig mit einer Abdichtschraube (67) verschlossen ist. Der Einsatz (66) ist hohl ausgebildet und hat Verbindung zu dem Übergabekanal (38), der von einer Nut im Übergabeboden (63) und der Innenseite der Gehäuseschale (8) begrenzt wird. Der nach oben gehende Teil des Übergabeanschlußformteils (62) trägt in diesem Fall keine Dichtung. Funktionsgleich ist eine Ringdichtung (68) in eine Nut im Mantel des Fortsatzes (21) eingesetzt, die die Abdichtung des Übergaberaumes (37) nach außen bewirkt.

Eine weitere Abweichung gegenüber dem Stellventil (1) gemäß den Figure (1) und (2) besteht darin, daß der Entlüftungsstopfen (55) direkt in eine Gewindebohrung (69) im Führungsabsatz (64) des Übergabeanschlußformteils (62) eingeschraubt ist. Dies hat den Vorzug, daß der Entlüftungsstopfen (55) beiM Wechsel aus der ersten Montagestellung gemäß Figur (3) in die zweite Montagestellung gemäß Figur (4) nicht mehr heraus- und wieder eingeschraubt werden muß.

In die druckkammerseitige Anschlußöffnung (33) ist eine Hohlschraube (70̸) eingeschraubt, die von einer Abdichtschraube (71) verschlossen ist, wobei die Abdichtschraube (71) durch eine Abdeckhaube (72) geschützt ist.

Die Funktion des Stellantriebes (61) gemäß Figur (3) entspricht derjenigen des Stellantriebes (1) gemäß Figur (1), so daß insoweit ebenfalls Bezug auf die Beschreibung zu diesem Stellantrieb (1) genommen wird. Bei der Ummontierung in die zweite Montagestellung gemäß Figur (4) wird im wesentlichen genauso vorgegangen, wie zu dem Stellantrieb (1) gemäß den Figure (1) und (2) beschrieben. Abweichungen bestehen nur insoweit, als der Einsatz (66) in der Anschlußöffnung (34) nach abgenommenem Membrangehäuse (6) zusammen mit der Abdichtschraube (67) herausgeschraubt wird, die Abdichtschraube (67) aus dem Einsatz (66) entfernt, der Einsatz (66) wieder in die Anschlußöffnung (34) eingesetzt und in den Führungsabsatz (65) eingeschraubt sowie die Abdichtschraube (67) in den Belüftungskanalabschnitt (53) zu dessen Abdichtung eingeschraubt wird. Dann wird die Abdeckhaube (72) entfernt und die Abdichtschraube (71) aus der Hohlschraube (70̸) herausgeschraubt. Die Abdichtschraube (71) wird dann von außen in den Einsatz (66) eingeschraubt, so daß er nach außen hin geschlossen wird. Zum Schutz wird wieder die Abdeckhaube (72) aufgesetzt.

## Patentansprüche

1. Pneumatischer Stellantrieb (1, 61) für Stellglieder, insbesondere Stellventile, mit einem Antriebsgehäuse (6) und mit einem darin beweglichen Antriebsorgan (15), an dem ein aus dem Antriebsgehäuse (6) austretendes, mit dem Antriebsorgan (15) bewegliches Antriebselement (24) für die Betätigung des Stellgliedes (1, 61) befestigt ist und das das Antriebsgehäuse (6) in eine Druckkammer (16) und in eine Rückstellkammer (17) mit einem das Antriebsorgan (15) beaufschlagenden Rückstellglied (19, 20) aufteilt, sowie mit einem Stellungsregler (41), dessen Ausgang (48) in einen internen Luftzuführkanal (49) mündet, welcher Verbindung zu einem rückstellkammerseitigen Übergabeanschluß (35, 62) am Antriebselement (24) hat, wobei das Antriebselement (24) einen von dem Übergabeanschluß (35, 62) ausgehenden und in die Druckkammer (16) mündenden Luftführungskanal (30) und die Rückstellkammer (17) eine Anschlußöffnung (34) aufweist,
dadurch gekennzeichnet, daß die Anschlußöffnung (34) mit dem Luftzuführkanal (49) Verbindung hat, und daß der Übergabeanschluß (35, 62) ein in die Rückstellkammer (17) eingesetztes, separates Bauteil ist, das die Anschlußöffnung (34) mit dem Luftführungskanal (30) verbindet.

2. Pneumatischer Stellantrieb (1, 62) für Stellglieder, insbesondere Stellventile, mit einem Antriebsgehäuse (6) und mit einem darin beweglichen Antriebsorgan (15), an dem ein aus dem Antriebsgehäuse (6) austretendes, mit dem Antriebsorgan (15) bewegliches Antriebselement (24) für die Betätigung des Stellgliedes (1, 62) lösbar befestigt ist und das das Antriebsgehäuse (6) in eine Druckkammer (16) und in eine Rückstellkammer (17) mit einem das Antriebsorgan (15) beaufschlagenden Rückstellglied (19, 20) aufteilt, sowie mit einem Stellungsregler (41), dessen Ausgang (48) in einen internen Luftzuführkanal (49) mündet, wobei das Antriebsgehäuse (6) in der Weise umgekehrt montierbar ist, daß in einer ersten Montagestellung die Rückstellkammer (17) und in einer zweiten Montagestellung die Druckkammer (16) dem Stellungsregler (41) benachbart ist, und wobei ferner das Antriebselement (24) einen Luftführungskanal (30) aufweist, der auf der dem Stellungsregler (41) abgewandten Seite des Antriebsorgans (15) in die dortige Kammer (16) bzw. (17) mündet, und wobei desweiteren am Antriebselement (24) ein Übergabeanschluß (35, 62) vorhanden ist, der in der ersten Montagestellung eine Verbindung zwischen Luftzuführkanal (49) und Luftführungskanal (30) herstellt, und wobei die Rückstellkammer (17) eine erste Anschlußöffnung (34) aufweist,
dadurch gekennzeichnet, daß die erste Anschlußöffnung (34) für die erste Montagestellung mit dem Luftzuführkanal (49) verbindbar und für die zweite Montagestellung sperrbar ist, daß der Übergabeanschluß (35, 62) ein in die Rückstellkammer (17) eingesetztes, separates Bauteil ist, das in der ersten Montagestellung die erste Anschlußöffnung (34) mit dem Luftführungskanal (30) verbindet und daß die Druckkammer (16) eine zweite Anschlußöffnung (33) hat, die für die zweite Montagestellung mit dem Luftzuführkanal (49) verbindbar und für die erste Montagestellung sperrbar ist.

3. Stellantrieb (1, 62) nach Anspruch (2),
dadurch gekennzeichnet, daß der Luftführungskanal (30) eine über den Bereich des Übergabeanschlusses (35, 62) hinausgehende Verlängerung (29) aufweist, die in einen Beschleierungsraum (42) im Bereich der Koppelung von Stellungsregler (41) und Antriebselement (24) mündet, wobei die Verlängerung (29) für die erste Montagestellung sperrbar und für die zweite Montagestellung öffenbar ist, und daß der Übergabeanschluß (35, 62) eine Durchtrittsöffnung (39, 66) aufweist, welche für die erste Montagestellung sperrbar und für die zweite Montagestellung öffenbar ist.

4. Stellantrieb nach Anspruch (2) oder (3),
dadurch gekennzeichnet, daß der Luftführungskanal (30) in einer Spannschraube (28) verläuft, mit der Antriebsorgan (15) und Antriebselement (24) verspannt sind und die über eine verschließbare Öffnung (9, 10) im Antriebsgehäuse (6) für den Wechsel der Montagestellung herauslösbar ist.

5. Stellantrieb nach Anspruch (3) und (4),
dadurch gekennzeichnet, daß das der Verlängerung (29) benachbarte Ende der Spannschraube (28) mit einer Verschlußschraube (31) sperrbar ist.

6. Stellantrieb nach einem der Ansprüche (2) bis (5),
dadurch gekennzeichnet, daß von dem Antriebsorgan (15, 18) rückstellkammerseitig in axialer Verlängerung des Antriebselements (24) ein Fortsatz (21) vorsteht, der in der ersten Montagestellung stirnseitig mit dem Antriebselement (24) lösbar verspannt ist und an dem der Übergabeanschluß (35, 62) abdichtend anliegt.

7. Stellantrieb nach einem der Ansprüche (2) bis (6),
dadurch gekennzeichnet, daß das Antriebsgehäuse (6) rückstellkammerseitig eine Belüftungsöffnung aufweist, welche in der ersten Montagestellung Verbindung zu einem Belüftungskanal (52) hat, der in einen Beschleierungsraum (42) im Bereich der Kopplung von Antriebselement (24) und Stellungsregler (41) mündet und für die zweite Montagestellung sperrbar ist.

8. Stellantrieb (1, 62) nach einem der Ansprüche (1) bis (7),
dadurch gekennzeichnet, daß der Übergabeanschluß (35, 62) das Antriebselement (24) abdichtend umgibt.

9. Stellantrieb (1, 62) nach einem der Ansprüche (1) bis (8),
dadurch gekennzeichnet, daß der Übergabeanschluß (35, 62) an der Innenseite des rückstellkammerseitigen Teils (8) des Antriebsgehäuses (6) befestigt ist.

10. Stellantrieb (1, 62) nach Anspruch (9),
dadurch gekennzeichnet, daß der Übergabeanschluß (35, 62) mit dem Antriebsgehäuse (6) abgedichtete Übergaberäume (37, 38) bildet.

11. Stellantrieb (1, 62) nach einem der Ansprüche (1) bis (10̸),
dadurch gekennzeichnet, daß sich der Übergabeanschluß (35) außerhalb der Anlage des Rückstellelements (19, 20̸) erstreckt.

12. Stellantrieb (1, 62) nach einem der Ansprüche (1) bis (10̸),
dadurch gekennzeichnet, daß sich der Übergabeanschluß (62) bis in den Bereich des Rückstellelements (19, 20̸) erstreckt und dieses an ihm anliegt.

13. Stellantrieb (1, 62) nach Anspruch (12),
dadurch gekennzeichnet, daß der Übergabeanschluß (62) Führungselemente (64, 65) für das Rückstellelement (19, 20̸) aufweist.

## Claims

1. A pneumatic actuating drive (1, 61) for actuators, particularly control valves, having a drive housing (6) and having a drive member (15) movable therein to which a drive element (24) is fixed for operating the actuator (1, 61), which drive element can move with the drive member (15) and emerges from the drive housing (6), which drive member divides the drive housing (6) into a pressure chamber (16) and into a restoring chamber (17) having a restoring element (19, 20) which acts upon the drive member (15), and having a position regulator (41), the outlet (48) of which leads into an internal air admission channel (49) which is connected to a transfer connection (35, 62) on the drive element (24) on the restoring chamber side, wherein the drive element (24) has an air conveying channel (30) starting from the transfer connection (35, 62) and leading into the pressure chamber (16) and the restoring chamber (17) has a connection opening (34), characterised in that the connection opening (34) is connected to the air admission channel (49), and that the transfer connection (35, 62) is a separate component which is inserted in the restoring chamber (17) and which connects the connection opening (34) to the air conveying channel (30).

2. A pneumatic actuating drive (1, 62) for actuators, particularly control valves, having a drive housing (6) and having a drive member (15) movable therein to which a drive element (24) is detachably fixed for operating the actuator (1, 62), which drive element can move with the drive member (15) and emerges from the drive housing (6), which drive member divides the drive housing (6) into a pressure chamber (16) and into a restoring chamber (17) having a restoring element (19, 20) which acts upon the drive member (15), and having a position regulator (41), the outlet (48) of which leads into an internal air admission channel (49), wherein the drive housing (6) can be installed reversibly in such a way that in a first installed position the restoring chamber (17) is adjacent to the position regulator (41) and in a second installed position the pressure chamber (16) is adjacent to the position regulator, and wherein in addition the drive element (24) comprises an air conveying channel (30) which leads, on the side of the drive member (15) facing away from the position regulator (41), into the chamber (16; 17) there, and wherein further a transfer connection (35, 62) exists on the drive element (24) and in the first installed position produces a connection between the air admission channel (49) and the air conveying channel (30), and wherein the restoring chamber (17) has a first connection opening (34), characterised in that the first connection opening (34) can be connected to the air admission channel (49) for the first installed position and can be closed for the second installed position, that the transfer connection (35, 62) is a separate component which is inserted in the restoring chamber (17) and which in the first installed position connects the first connection opening (34) to the air conveying channel (30), and that the pressure chamber (16) has a second connection opening (33) which can be connected to the air admission channel (49) for the second installed position and can be closed for the first installed position.

3. An actuating drive (1, 62) according to claim 2, characterised in that the air conveying channel (30) has an extension (29) which extends beyond the region of the transfer connection (35, 62) and which leads into a screening space (42) in the region of the coupling of the position regulator (41) and the drive element (24), wherein the extension (29) can be closed for the first installed position and can be opened for the second installed position, and that the transfer connection (35, 62) has a passageway opening (39, 66) which can be closed for the first installed position and can be opened for the second installed position.

4. An actuating drive according to claim 2 or 3, characterised in that the air conveying channel (30) extends in a draw spindle (28) by means of which the drive member (15) and drive element (24) are braced and which can be taken out via a closable opening (9, 10) in the drive housing (6) in order to change the installed position.

5. An actuating drive according to claims 3 and 4, characterised in that the end of the draw spindle (28) adjacent to the extension (29) can be closed with a screw plug (31).

6. An actuating drive according to any one of claims 2 to 5, characterised in that a prolongation (21) projects from the drive member (15, 18) on the restoring chamber side as an axial extension of the drive element (24), which prolongation is detachably clamped to the end face of the drive element (24) in the first installed position and is seated against the transfer connection (35, 62) forming a seal.

7. An actuating drive according to any one of claims 2 to 6, characterised in that the drive housing (6) has an aeration opening on the restoring chamber side, which aeration opening is connected in the first installed position to an aeration channel (52) which leads into a screening chamber (42) in the region of the coupling of the drive element (24) and the position regulator (41) and which can be closed for the second installed position.

8. An actuating drive (1, 62) according to any one of claims 1 to 7, characterised in that the transfer connection (35, 62) surrounds the drive element (24) forming a seal.

9. An actuating drive (1, 62) according to any one of claims 1 to 8, characterised in that the transfer connection (35, 62) is fixed to the inside of the restoring chamber side part (8) of the drive housing (6).

10. An actuating drive (1, 62) according to claim 9, characterised in that the transfer connection (35, 62) forms sealed transfer spaces (37, 38) with the drive housing (6).

11. An actuating drive (1, 62) according to any one of claims 1 to 10, characterised in that the transfer connection (35) extends outside the installation of the restoring element (19, 20).

12. An actuating drive (1, 62) according to any one of claims 1 to 10, characterised in that the transfer connection (62) extends into the region of the restoring element (19, 20) and is seated against the latter.

13. An actuating drive (1, 62) according to claim 12, characterised in that the transfer connection (62) has guide elements (64, 65) for the restoring element (19, 20).

## Revendications

1. Servo-entraînement pneumatique (1, 61) pour des organes de régulation, notamment des soupapes de régulation, avec un boîtier d'entraînement (6) et avec un organe d'entraînement (15) mobile dans ce boîtier, organe auquel est fixé un élément d'entraînement (24) sortant du boîtier d'entraînement (6), mobile avec l'organe d'entraînement (15) et destiné à actionner l'organe de régulation (1, 61), et organe qui divise le boîtier d'entraînement (6) en une chambre de pression (16) et une chambre de rappel (17) pourvue d'un organe de rappel (19, 20) sollicitant l'organe d'entraînement (15), ainsi qu'avec un régulateur de position (41) dont la sortie (48) débouche dans un canal d'apport d'air interne (49) qui communique avec un branchement de transfert (35, 62) prévu du côté de la chambre de rappel sur l'élément d'entraînement (24), l'élément d'entraînement (24) présentant un canal de guidage d'air (30) partant du branchement de transfert (35, 62) et débouchant dans la chambre de pression (16), et la chambre de rappel (17) présentant une ouverture de raccordement (34),
**caractérisé** en ce que l'ouverture de raccordement (34) communique avec le canal d'apport d'air (49), et en ce que le branchement de transfert (35, 62) est une pièce séparée insérée dans la chambre de rappel (17), pièce qui relie l'ouverture de raccordement (34) au canal de guidage d'air (30).

2. Servo-entraînement pneumatique (1, 62) pour des organes de régulation, notamment des soupapes de régulation, avec un boîtier d'entraînement (6) et avec un organe d'entraînement (15) mobile dans ce boîtier, organe auquel est fixé de manière amovible un élément d'entraînement (24) sortant du boîtier d'entraînement (6), mobile avec l'organe d'entraînement (15) et destiné à actionner l'organe de régulation (1, 61), et organe qui divise le boîtier d'entraînement (6) en une chambre de pression (16) et une chambre de rappel (17) pourvue d'un organe de rappel (19, 20) sollicitant l'organe d'entraînement (15), ainsi qu'avec un régulateur de position (41) dont la sortie (48) débouche dans un canal d'apport d'air interne (49), le boîtier d'entraînement (6) pouvant être monté en position inversée de telle sorte que la chambre de rappel (17) est voisine du régulateur de position (41) dans une première position de montage, tandis que c'est la chambre de pression (16) qui est voisine de ce dernier dans une seconde position de montage, et l'élément d'entraînement (24) présentant en outre un canal de guidage d'air (30) qui débouche du côté de l'organe d'entraînement (15) opposé au régulateur de position (41) dans la chambre (16 ou 17) qui se trouve de ce côté, et un branchement de transfert (35, 62) étant en outre présent sur l'élément d'entraînement (24), branchement qui réalise, dans la première position de montage, une liaison entre le canal d'apport d'air (49) et le canal de guidage d'air (30), et la chambre de rappel (17) présentant une première ouverture de raccordement (34),
**caractérisé** en ce que la première ouverture de raccordement (34) peut être reliée au canal d'apport d'air (49) pour la première position de montage et isolée pour la seconde position de montage, en ce que le branchement de transfert (35, 62) est une pièce séparée insérée dans la chambre de rappel (17), pièce qui relie la première ouverture de raccordement (34) au canal de guidage d'air (30) dans la première position de montage, et en ce que la chambre de pression (16) possède une deuxième ouverture de raccordement (33), qui peut être reliée au canal d'apport d'air (49) pour la seconde position de montage et isolée pour la première position de montage.

3. Servo-entraînement (1, 62) selon la revendication 2, **caractérisé** en ce que le canal de guidage d'air (30) présente un prolongement (29) s'étendant au-delà de la région du branchement de transfert (35, 62), prolongement qui débouche dans une chambre de voilage (42) dans la région de l'accouplement du régulateur de position (41) et de l'élément d'entraînement (24), le prolongement (29) pouvant être isolé pour la première position de montage et ouvert pour la seconde position de montage, et en ce que le branchement de transfert (35, 62) présente une ouverture de passage (39, 66) qui peut être isolée pour la première position de montage et ouverte pour la seconde position de montage.

4. Servo-entraînement selon la revendication 2 ou 3, **caractérisé** en ce que le canal de guidage d'air (30) s'étend dans une vis de serrage (28), par laquelle l'organe d'entraînement (15) et l'élément d'entraînement (24) sont assemblés avec serrage et qui, afin d'inverser la position de montage, peut être dévissée et sortie par une ouverture (9, 10) prévue dans le boîtier d'entraînement (6) et pouvant être fermée.

5. Servo-entraînement selon les revendications 3 et 4, **caractérisé** en ce que l'extrémité de la vis de serrage (28) qui est voisine du prolongement (29) peut être fermée par une vis de fermeture (31).

6. Servo-entraînement selon l'une des revendications 2 à 5, **caractérisé** en ce qu'un prolongement (21) dépasse de l'organe d'entraînement (15, 18) du côté de la chambre de rappel dans le prolongement axial de l'élément d'entraînement (24), prolongement qui, dans la première position de montage, est assemblé avec serrage par son côté frontal à l'élément d'entraînement (24) de manière amovible, et contre lequel s'applique en étanchéité le branchement de transfert (35, 62).

7. Servo-entraînement selon l'une des revendications 2 à 6, **caractérisé** en ce que le boîtier d'entraînement (6) présente du côté de la chambre de rappel une ouverture d'aérage qui, dans la première position de montage, communique avec un canal d'aérage (52), qui débouche dans une chambre de voilage (42) dans la région de l'accouplement de l'élément d'entraînement (24) et du régulateur de position (41), et qui peut être fermé pour la seconde position de montage.

8. Servo-entraînement (1, 62) selon l'une des revendications 1 à 7, **caractérisé** en ce que le branchement de transfert (35, 62) entoure en étanchéité l'élément d'entraînement (24).

9. Servo-entraînement (1, 62) selon l'une des revendications 1 à 8, **caractérisé** en ce que le branchement de transfert (35, 62) est fixé sur le côté intérieur de la partie (8) du boîtier d'entraînement (6) qui est située du côté de la chambre de rappel.

10. Servo-entraînement (1, 62) selon la revendication 9, **caractérisé** en ce que le branchement de transfert (35, 62) forme des chambres de transfert (37, 38) rendues étanches avec le boîtier d'entraînement (6).

11. Servo-entraînement (1, 62) selon l'une des revendications 1 à 10, **caractérisé** en ce que le branchement de transfert (35) s'étend en dehors de l'application de l'organe de rappel (19, 20).

12. Servo-entraînement (1, 62) selon l'une des revendications 1 à 10, **caractérisé** en ce que le branchement de transfert (62) s'étend jusque dans la région de l'organe de rappel (19, 20), et ce dernier s'applique contre lui.

13. Servo-entraînement (1, 62) selon la revendication 12, **caractérisé** en ce que le branchement de transfert (62) présente des éléments de guidage (64, 65) pour l'organe de rappel (19, 20).
